# EUROPEAN PATENT SPECIFICATION

(11) **EP 4 342 759 B1**
(45) Date of publication and mention of the grant of the patent: **25.12.2024**
(21) Application number: 22315215.8
(22) Date of filing: 23.09.2022
(51) Int. Cl.: B61D 17/06, B60S 1/06, B61D 17/20, B61D 25/00, B61F 19/04

(54) **FRONT ARRANGEMENT FOR A RAIL VEHICLE PROVIDED WITH A PIECE OF EQUIPMENT AND A CRASH-RESISTANT PLATE**
FRONTANORDNUNG FÜR EIN SCHIENENFAHRZEUG MIT EINEM AUSRÜSTUNGSTEIL UND EINER CRASHFESTEN PLATTE
AGENCEMENT AVANT POUR VÉHICULE FERROVIAIRE MUNI D'UN ÉQUIPEMENT ET D'UNE PLAQUE ANTI-COLLISION

(43) Date of publication of application: 27.03.2024
(73) Proprietor: ALSTOM Holdings, 93400 Saint-Ouen-sur-Seine (FR)
(72) Inventor: Garden, Andrew, Nottingham, NG9 6DD (GB); Swann, Matthew, Lichfield, WS14 9XL (GB); Chillingworth, Tom, Derby, DE24 5AE (GB)
(74) Representative: Alatis

(56) References cited:
- JP-U- H0 653 355
- US-A1- 2019 106 128
- US-B2- 9 027 484

## Description

### TECHNICAL FIELD OF THE INVENTION

The present invention relates to a rail vehicle, and more specifically to a front arrangement for a rail vehicle with means for protecting occupants in the event of an impact.

### BACKGROUND ART

US2013284047 discloses a front-end arrangement for a railway vehicle with an impact structure and a wiper device comprising a motor unit and a front wiper. The impact structure comprises at least one impact absorbing element. The wiper device is attached to the impact structure and is movable relative to a support of the front arrangement and thus movable relative to the supporting structure of the vehicle so as to move backwards in the event of an impact and to enable the effective impact energy to be absorbed by the impact absorption element.

This arrangement, however, fails to address the risk of a wiper motor unit, or any other piece of equipment, piercing a crash-resistant plate that separates the impact absorbing structure of the front end from the driver's cabin or passenger compartment. Another front arrangement for a rail vehicle of the aforesaid kind is known from JP H06 53355 U.

### SUMMARY OF THE INVENTION

The invention aims to provide a front arrangement for a rail vehicle, in which the risk of a piece of equipment piercing through a crash-resistant plate of the front arrangement is reduced.

According to a first aspect of the invention, there is provided a front arrangement for a rail vehicle, comprising a crash-resistant plate having a front side facing a front direction of the front arrangement, a piece of equipment and a bracket assembly for fixing the piece of equipment to the front side of the crash-resistant plate, wherein the bracket assembly includes a frame positioned at a distance from the crash-resistant plate for supporting and fixing the piece of equipment and at least a first bracket-linking the frame to the crash-resistant plate, wherein a front end of the piece of equipment protrudes from the frame in the front direction and a rear end of the piece of equipment protrudes from the frame towards the crash-resistant plate at a distance from the crash-resistant plate, and the first bracket has a first plastically deformable region located at a distance from a reference axis parallel to the front direction and crossing the front end of the piece of equipment, wherein the first plastically deformable region defines a first pivot area, such that a force applied to the front end of the piece of equipment towards the crash-resistant plate parallel to the front direction above a force threshold results in plastic bending of the first plastically deformable region and a pivoting movement of the piece of equipment and frame about the first pivot area. The first plastically deformable region is shaped to allow stress concentration and constitute a preferential deformation zone.

During an impact, the orientation of the piece of equipment relative to the crash-resistant plate changes before the piece of equipment reaches the crash-resistant plate, thereby ensuring the physical integrity of the crash-resistant plate, which cannot be pierced through by a violent backward translation of the sharp rear end of the piece of equipment. If the energy released during the impact is so high that a contact between the side of the piece of equipment and the crash-resistant plate occurs, the area of such a contact is substantially greater than it would be between the plate and the sharp rear end of the piece of equipment, leading to a better distribution of the mechanical stress on the crash-resistant plate, to avoid the piercing of the impact-resistant plate.

In one embodiment, the plastic bending of the first bracket causes the piece of equipment to pivot by at least 45° and preferably at least 60°. The closer the pivoting movement is to a 90° angle, the larger the area of contact between the piece of equipment and the crash-resistant plate, should such contact take place.

In one embodiment, the first bracket has a reduced cross-section in the plastically deformable region compared to the remainder of the first bracket to concentrate stress. More generally, the plastically deformable region has a lower quadratic moment relative to a centroid axis of the first bracket parallel to reference axis than the remainder of the first bracket.

In one embodiment, the first bracket comprises sheet metal with a V-shaped cut-out, the plastically deformable region of the first bracket being located at a vertex of the V-shaped cut-out. The section of the bracket with the lower quadratic moment of area is located at the vertex of the V-shaped cut-out and has the lower resistance to plastic deformation. Therefore, the location of the V-shaped cut-out on the bracket defines the position of the pivot area.

In one embodiment, an end of the first bracket is in surface contact with the front side of the crash-resistant plate. The surface of contact between the first bracket and the front side of the crash-resistant plate is large enough to distribute the load during an impact.

In one embodiment, the end of the first bracket is fixed to the front side of the crash-resistant plate by the means of fixing elements such as screws, bolts, rivets or the like.

In a preferred embodiment, the bracket assembly comprises a second bracket linking the frame to the crash-resistant plate and spaced apart from the first bracket, the second bracket has a second plastically deformable region located at a distance from the reference axis, wherein the second plastically deformable region defines a second pivot area, such that a force applied to the front end of the piece of equipment towards the crash-resistant plate parallel to the front direction above the force threshold results in plastic bending of the first and second brackets and a pivoting movement of the piece of equipment about a pivot axis, wherein the pivot axis crosses the first and second pivot areas and an orthogonal projection on a reference plane perpendicular to the front direction of the front end of the piece of equipment is located at a distance from an orthogonal projection on the reference plane of the pivot axis. The distance between the orthogonal projection on the reference plane of the front end of the piece of equipment and the orthogonal projection on the reference plane of the pivot axis can be adjusted to adjust the global mechanical resistance of the structure to bending. The second plastically deformable region is shaped to allow stress concentration and constitute a preferential deformation zone. In one embodiment, the second bracket has a reduced cross-section in the plastically deformable region compared to the remainder of the first bracket to concentrate stress. More generally, the plastically deformable region has a lower quadratic moment relative to a centroid axis of the first bracket parallel to reference axis than the remainder of the first bracket.

The second bracket is particularly useful to enable the bracket assembly to resist torque about the reference axis, as may occur in particular if the piece of equipment is a wiper motor unit.

In one embodiment, the bracket assembly is made of several parts, which are preferably welded together following welding lines. The parts are preferably made of sheet metal.

In one embodiment, the first, and if applicable the second bracket, include(s) at least one associated reinforcing rib extending from the frame to the crash-resistant plate to ensure that the plastic bending of the bracket takes place as intended, and reduce the risk of unwanted deformations, such as a buckling. In one embodiment, the first and, if applicable, the second bracket, form(s) with the associated reinforcing rib a closed cross-section to withstand high service loads, in particular torsion loads.

In one embodiment, the piece of equipment is a wiper motor unit.

In one embodiment, the front arrangement comprises an outer skin which covers the frame and at least partially covers the piece of equipment and is preferably made of glass-reinforced plastics. Preferably, the front end of the piece of equipment protrudes from the outer skin.

The above-mentioned embodiments can be combined.

### BRIEF DESCRIPTION OF THE FIGURES

Other advantages and features of the invention will then become more clearly apparent from the following description of a specific embodiment of the invention given as non-restrictive example only and represented in the accompanying drawings in which:
- figure 1 is an isometric view of a front arrangement of a rail vehicle according to an embodiment of the invention;
- figure 2 is a view of a detail Z1 of figure 1;
- figure 3 is a top cross-sectional view of a bracket assembly in operational position on the front arrangement of figure 1;
- figure 4 is a cross-sectional view along line D-D of figure 3;
- figure 5 is an isometric view of the bracket assembly of figure 3.

Corresponding reference numerals refer to the same or corresponding parts in each of the figures.

### DETAILED DESCRIPTION OF PREFERRED EMBODIMENTS

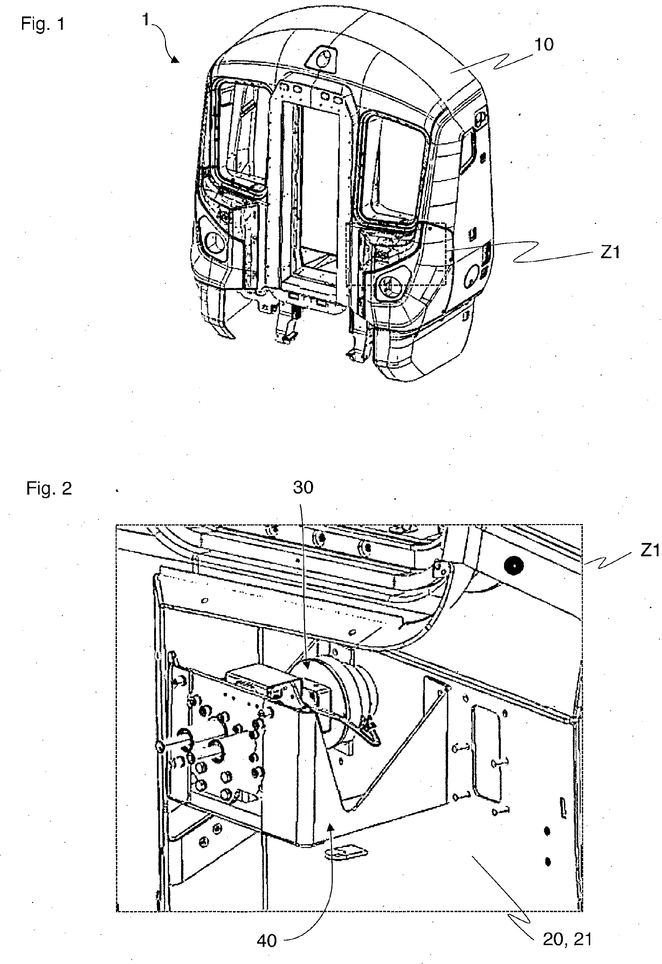

With reference to figure 1, a front arrangement **1** for a rail vehicle comprises a central gangway arranged to allow passengers to move from a first car to a second car connected with the first car and at least one windscreen for a driver located in a driver's cabin at least partly housed in the front arrangement. The front arrangement 1 is formed by a body structure covered by an outer skin **10.** The outer skin bestows to the head its shape and is made of light material, for instance of GRP (Glass Reinforced Plastics).

With reference to figure 2, a region **Z1** of the front arrangement **1** is illustrated with the outer skin **10** partially removed, to let appear the body structure of the front arrangement **1,** in particular a crash-resistant plate **20,** preferably made of thick sheet metal. The crash-resistant plate **20** has a front side **21** facing a front direction of the front arrangement **1.** The front arrangement **1** comprises a piece of equipment **30** and a bracket assembly **40** for fixing the piece of equipment **30** to the front side of the crash-resistant plates **20.** In this embodiment, the piece of equipment **30** is a wiper motor unit, yet any other kind of piece of equipment can be fixed with the bracket assembly **40.**

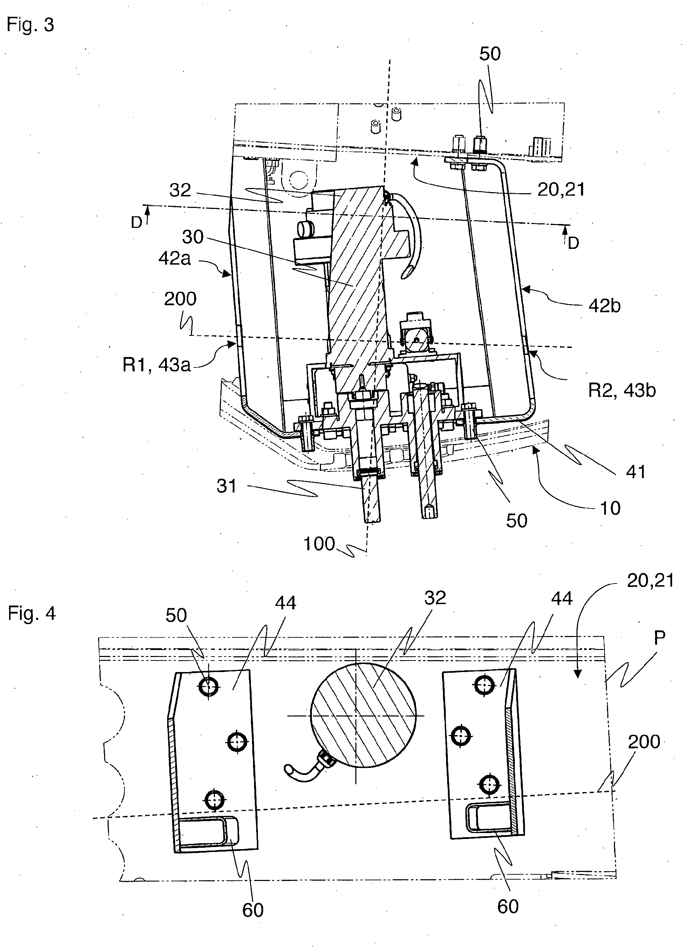

The bracket assembly **40** illustrated in figure 3 and 4 includes a frame **41** positioned at a distance from the crash-resistant plate **20** for supporting and fixing the piece of equipment **30.** Here, the piece of equipment **30** is fixed to the frame by means of fixing elements **50** such as screws or bolts. The outer skin **10** covers the frame **41** and at least partially covers the piece of equipment **30.** In this embodiment, the bracket assembly **40** comprises a first bracket **42a** and a second bracket **42b** linking the frame **41** to the crash-resistant plate **20.** The second bracket **42b** is spaced apart from the first bracket **42a.** A front end **31** of the piece of equipment **30,** here a motor shaft, protrudes from the frame **41** in the front direction and preferably protrudes from the outer skin **10.** A rear end **32** of the piece of equipment **30** protrudes from the frame **41** towards the crash-resistant plate **20** at a distance from the crash-resistant plate **20.**

The first bracket **42a** has a first plastically deformable region **R1** which has a lower quadratic moment, and therefore a lower resistance to bending, than a remainder of the first bracket **42a.** The second bracket **42b** has a second plastically deformable region **R2** which has a lower quadratic moment, and therefore a lower resistance to bending than a remainder of the second bracket **42b.**

The first and second plastically deformable regions **R1, R2** are located at a distance from a reference axis **100** which is parallel to the front direction and crosses the front end **31** of the piece of equipment. The first plastically deformable region **R1** defines a first pivot area **43a** and the second plastically deformable region **R2** defines a second pivot area **43b** such that a force applied to the front end **31** of the piece of equipment **30** towards the crash-resistant plate **20** parallel to the front direction above the force threshold results in plastic bending of the first and second brackets **42a, 42b** and a pivoting movement of the piece of equipment about a pivot axis **200,** which crosses the first and second pivot areas **43a, 43b.** Viewed in a reference plane **P** perpendicular to the front direction, an orthogonal projection of the front end **31** of the piece of equipment **30** is located at a distance from an orthogonal projection of the pivot axis **200.**

When a force parallel to the reference axis is applied to the front end of the piece of equipment **30** during a collision, the plastic bending of the first and second brackets **42a, 42b** causes the piece of equipment **30** to pivot by at least 45°, and preferably at least 60° about the pivot axis **200** before the side of the piece of equipment **30** eventually collides with the crash-resistant plate **20.**

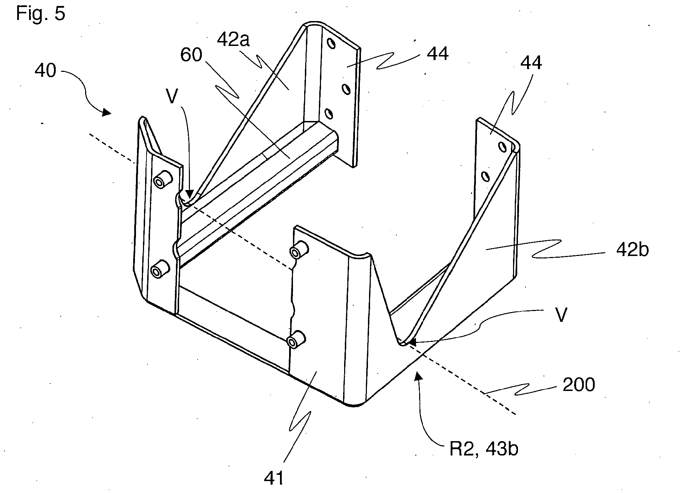

As shown in figure 5 the bracket assembly **40** can be made of several parts including at least the frame **41,** the first bracket **42a** and, where applicable, the second bracket **42b.** The parts of the bracket assembly **40** are preferably made of sheet metals, welded together following welding lines. The first and second brackets **42a, 42b** comprise sheets with a V-shaped cut-out, the plastically deformable regions **R1, R2** of the first and second brackets **42a, 42b** being located each at a vertex **V** of the V-shaped cut-out. In this embodiment, the first and second brackets include at least one reinforcing rib **60** extending from the frame **41** to the crash-resistant plate **20.** Each of the reinforcing ribs **60** forms a closed cross-section with the main sheet of the associated bracket **42a, 42b.** The first and second brackets **42a, 42b** each have a bent rear end **44** in surface contact with the front side **21** of the crash-resistant plate. The ends **44** are fixed to the front side **21** of the crash-resistant plate **20** by the means of screws or other fixing elements **50,** by welding or any other means.

## Claims

1. A front arrangement (1) for a rail vehicle, comprising
- a crash-resistant plate (20) having a front side (21) facing a front direction of the front arrangement (1),
- a piece of equipment (30) and
- a bracket assembly (40) for fixing the piece of equipment (40) to the front side (21) of the crash-resistant plate (20),
wherein the bracket assembly (40) includes a frame (41) positioned at a distance from the crash-resistant plate (20) for supporting and fixing the piece of equipment (30) and at least a first bracket (42a) linking the frame (41) to the crash-resistant plate (20),
a front end (31) of the piece of equipment (30) protrudes from the frame (41) in the front direction and a rear end (32) of the piece of equipment (30) protrudes from the frame (41) towards the crash-resistant plate (20) at a distance from the crash-resistant plate (20), and
the first bracket (42a) has a first plastically deformable region (R1) located at a distance from a reference axis (100) parallel to the front direction and crossing the front end (31) of the piece of equipment (30),
**characterised in that** the first plastically deformable region (R1) defines a first pivot area (43a), such that a force applied to the front end (31) of the piece of equipment (30) towards the crash-resistant plate (20) parallel to the front direction above a force threshold results in plastic bending of the first plastically deformable region (R1) and a pivoting movement of the piece of equipment (30) and frame (41) about the first pivot area (43a).

2. The front arrangement (1) of claim 1, wherein the plastic bending of the first bracket (42a) causes the piece of equipment (30) to pivot by at least 45° and preferably at least 60°.

3. The front arrangement (1) of any one of the preceding claims, wherein the plastically deformable region (R1) has a lower quadratic moment relative to a centroid axis of the first bracket (42a) parallel to reference axis (100) than the remainder of the first bracket (42a).

4. The front arrangement (1) of any one of the preceding claims, wherein the first bracket (42a) comprises a sheet metal with a V-shaped cut-out, the plastically deformable region (R1) of the first bracket (42a) being located at a vertex (V) of the V-shaped cut-out.

5. The front arrangement (1) of any one of the preceding claims, wherein an end (44) of the first bracket (42a) is in surface contact with the front side (21) of the crash-resistant plate (20).

6. The front arrangement (1) of any one of the preceding claims, wherein the end (44) of the first bracket (42a) is fixed to the front side (21) of the crash-resistant plate (20) by the means of fixing elements (50).

7. The front arrangement (1) of any one of the preceding claims, wherein
the bracket assembly (40) comprises a second bracket (42b) linking the frame (41) to the crash-resistant plate (20) and spaced apart from the first bracket (42a),
the second bracket (42b) has a second plastically deformable region (R2) located at a distance from the reference axis (100),
the second plastically deformable region (R2) defines a second pivot area (43b), such that a force applied to the front end (31) of the piece of equipment (30) towards the crash-resistant plate (21) parallel to the front direction above the force threshold results in plastic bending of the first and second brackets (42a, 42b) and a pivoting movement of the piece of equipment about a pivot axis (200),
the pivot axis (200) crosses the first and second pivot areas (43a, 43b) and an orthogonal projection on a reference plane (P) perpendicular to the front direction of the front end of the piece of equipment is located at a distance from an orthogonal projection on the reference plane (P) of the pivot axis (200).

8. The front arrangement (1) of any one of the preceding claims, wherein the bracket assembly (40) is made of several parts.

9. The front arrangement (1) of claim 8, wherein the parts are welded together.

10. The front arrangement (1) of any of the claims 8 to 9, wherein the parts are made of sheet metal.

11. The front arrangement (1) of any one of the preceding claims, wherein the first and, if applicable, the second bracket, include(s) at least one associated reinforcing rib (60) extending from the frame (41) to the crash-resistant plate (20).

12. The front arrangement (1) of claim 11, wherein the first and, if applicable, the second bracket, form(s) with the associated reinforcing rib (60) a closed cross-section.

13. The front arrangement (1) of any one of the preceding claims wherein the piece of equipment (30) is a wiper motor unit.

14. The front arrangement (1) of any of one of the preceding claims, further comprising an outer skin (10) which covers the frame (41) and at least partially covers the piece of equipment (30) and is preferably made of glass-reinforced plastics.

15. The front arrangement (1) of claim 14, wherein the front end (31) of the piece of equipment protrudes from the outer skin (10).

## Patentansprüche

1. Frontanordnung (1) für ein Schienenfahrzeug, umfassend
- eine kollisionssichere Platte (20), die eine Frontseite (21) aufweist, die einer Frontrichtung der Frontanordnung (1) zugewandt ist,
- ein Stück Ausrüstung (30) und
- eine Halterungsbaugruppe (40) zur Befestigung des Stücks Ausrüstung (40) an der Vorderseite (21) der kollisionssicheren Platte (20),
wobei
die Halterungsbaugruppe (40) einen Rahmen (41) einschließt, der in einem Abstand von der kollisionssicheren Platte (20) positioniert ist, um das Stück Ausrüstung (30) zu tragen und zu befestigen, und mindestens einen ersten Halter (42a), der den Rahmen (41) mit der kollisionssicheren Platte (20) verbindet,
ein Frontende (31) des Stücks Ausrüstung (30) aus dem Rahmen (41) in der Frontrichtung herausragt und ein hinteres Ende (32) des Stücks Ausrüstung (30) aus dem Rahmen (41) in Richtung der kollisionssicheren Platte (20) in einem Abstand zu der kollisionssicheren Platte (20) herausragt, und
die erste Halterung (42a) eine erste plastisch verformbare Region (R1) aufweist, die sich in einem Abstand von einer Bezugsachse (100) befindet, die parallel zur Frontrichtung verläuft und das Frontende (31) des Stücks der Ausrüstung (30) kreuzt, **dadurch gekennzeichnet, dass**
die erste plastisch verformbare Region (R1) einen ersten Schwenkbereich (43a) definiert, sodass eine auf das Frontende (31) des Stücks Ausrüstung (30) in Richtung der kollisionssicheren Platte (20) parallel zur Frontrichtung ausgeübte Kraft oberhalb eines Kraftschwellenwerts zu einer plastischen Biegung der ersten plastisch verformbaren Region (R1) und einer Schwenkbewegung des Stücks Ausrüstung (30) und des Rahmens (41) um den ersten Schwenkbereich (43a) führt.

2. Frontanordnung (1) nach Anspruch 1, wobei die plastische Biegung der ersten Halterung (42a) ein Schwenken des Stücks Ausrüstung (30) um mindestens 45° und vorzugsweise um mindestens 60° bewirkt.

3. Frontanordnung (1) nach einem der vorstehenden Ansprüche, wobei die plastisch verformbare Region (R1) ein geringeres quadratisches Moment relativ zu einer zur Bezugsachse (100) parallelen Schwerpunktachse der ersten Halterung (42a) aufweist als der übrige Teil der ersten Halterung (42a).

4. Frontanordnung (1) nach einem der vorstehenden Ansprüche, wobei die erste Halterung (42a) ein Metalblech mit einem V-förmigen Ausschnitt umfasst, wobei sich die plastisch verformbare Region (R1) der ersten Halterung (42a) an einem Scheitelpunkt (V) des V-förmigen Ausschnitts befindet.

5. Frontanordnung (1) nach einem der vorstehenden Ansprüche, wobei ein Ende (44) der ersten Halterung (42 a) in Oberflächenkontakt mit der Vorderseite (21) der kollisionssicheren Platte (20) steht.

6. Frontanordnung (1) nach einem der vorstehenden Ansprüche, wobei das Ende (44) der ersten Halterung (42a) mittels Befestigungselementen (50) an der Vorderseite (21) der kollisionssicheren Platte (20) befestigt ist.

7. Frontanordnung (1) nach einem der vorstehenden Ansprüche, wobei
die Halterungsbaugruppe (40) eine zweite Halterung (42b) umfasst, die den Rahmen (41) mit der kollisionssicheren Platte (20) verbindet und von der ersten Halterung (42a) beabstandet ist,
die zweite Halterung (42b) eine zweite plastisch verformbare Region (R2) aufweist, die sich in einem Abstand von der Bezugsachse (100) befindet,
die zweite plastisch verformbare Region (R2) einen zweiten Schwenkbereich (43b) definiert, sodass eine Kraft, die auf das vordere Ende (31) des Stücks Ausrüstung (30) in Richtung der kollisionssicheren Platte (21) parallel zur Frontrichtung oberhalb des Kraftschwellenwerts ausgeübt wird, zu einer plastischen Biegung der ersten und zweiten Halterung (42a, 42b) und einer Schwenkbewegung des Stücks Ausrüstung um eine Schwenkachse (200) führt,
die Schwenkachse (200) den ersten und zweiten Schwenkbereich (43a, 43b) kreuzt und eine orthogonale Projektion des Stücks Ausrüstung auf eine Bezugsebene (P) senkrecht zur Vorderrichtung des vorderen Endes sich in einem Abstand von einer orthogonalen Projektion der Schwenkachse (200) auf die Bezugsebene (P) befindet.

8. Frontanordnung (1) nach einem der vorstehenden Ansprüche, wobei die Halterungsgruppe (40) aus mehreren Teilen gefertigt ist.

9. Frontanordnung (1) nach Anspruch 8, wobei die Teile miteinander verschweißt sind.

10. Frontanordnung (1) nach einem der Ansprüche 8 bis 9, wobei die Teile aus Metallblech gefertigt sind.

11. Frontanordnung (1) nach einem der vorstehenden Ansprüche, wobei die erste und gegebenenfalls die zweite Halterung mindestens eine zugeordnete Verstärkungsrippe (60) einschließt, die sich von dem Rahmen (41) zu der kollisionssicheren Platte (20) erstreckt.

12. Frontanordnung (1) nach Anspruch 11, wobei die erste und gegebenenfalls die zweite Halterung mit der zugeordneten Verstärkungsrippe (60) einen geschlossenen Querschnitt bildet.

13. Frontanordnung (1) nach einem der vorstehenden Ansprüche, wobei das Stück Ausrüstung (30) eine Wischermotoreinheit ist.

14. Frontanordnung (1) nach einem der vorstehenden Ansprüche, ferner umfassend eine Außenhaut (10), die den Rahmen (41) abdeckt und das Stück Ausrüstung (30) mindestens teilweise bedeckt und vorzugsweise aus glasfaserverstärktem Kunststoff hergestellt ist.

15. Frontanordnung (1) nach Anspruch 14, wobei das Frontende (31) des Stücks Ausrüstung über die Außenhaut (10) hinausragt.

## Revendications

1. Agencement avant (1) pour un véhicule ferroviaire, comprenant
- une plaque résistante aux chocs (20) dont la face avant (21) est orientée vers une direction avant de l'agencement avant (1),
- une pièce d'équipement (30) et
- un ensemble de support (40) pour fixer la pièce d'équipement (40) à la face avant (21) de la plaque résistante aux chocs (20),
dans lequel
l'ensemble de support (40) comporte un cadre (41) placé à une distance de la plaque résistante aux chocs (20) pour soutenir et fixer la pièce d'équipement (30) et au moins un premier support (42a) reliant le cadre (41) à la plaque résistante aux chocs (20),
une extrémité avant (31) de la pièce d'équipement (30) fait saillie depuis le cadre (41) dans la direction avant et une extrémité arrière (32) de la pièce d'équipement (30) fait saillie depuis le cadre (41) vers la plaque résistante aux chocs (20) à une distance de la plaque résistante aux chocs (20), et
le premier support (42a) a une première région plastiquement déformable (R1) située à une distance d'un axe de référence (100) parallèle à la direction avant et traversant l'extrémité avant (31) de la pièce d'équipement (30), **caractérisé en ce que**
la première région plastiquement déformable (R1) définit une première zone de pivot (43a), de telle sorte qu'une force appliquée à l'extrémité avant (31) de la pièce d'équipement (30) vers la plaque résistante aux chocs (20) parallèle à la direction avant, au-delà d'un seuil de force, entraîne une flexion plastique de la première région plastiquement déformable (R1) et un mouvement de pivotement de la pièce d'équipement (30) et du cadre (41) autour de la première zone de pivot (43a).

2. Agencement avant (1) selon la revendication 1, dans lequel la flexion plastique du premier support (42a) fait pivoter la pièce d'équipement (30) d'au moins 45° et de préférence d'au moins 60°.

3. Agencement avant (1) selon l'une quelconque des revendications précédentes, dans lequel la région plastiquement déformable (R1) a un moment quadratique par rapport à un axe centroïde du premier support (42a) parallèle à l'axe de référence (100) inférieur au reste du premier support (42a).

4. Agencement avant (1) selon l'une quelconque des revendications précédentes, dans lequel le premier support (42a) comprend une tôle avec une découpe en forme de V, la région plastiquement déformable (R1) du premier support (42a) étant située au niveau d'un sommet (V) de la découpe en forme de V.

5. Agencement avant (1) selon l'une quelconque des revendications précédentes, dans lequel une extrémité (44) du premier support (42a) est en contact superficiel avec la face avant (21) de la plaque résistante aux chocs (20).

6. Agencement avant (1) selon l'une quelconque des revendications précédentes, dans lequel l'extrémité (44) du premier support (42a) est fixée à la face avant (21) de la plaque résistante aux chocs (20) au moyen d'éléments de fixation (50).

7. Agencement avant (1) selon l'une quelconque des revendications précédentes, dans lequel
l'ensemble de support (40) comprend un second support (42b) reliant le cadre (41) à la plaque résistante aux chocs (20) et espacé du premier support (42a),
le second support (42b) a une seconde région plastiquement déformable (R2) située à une distance de l'axe de référence (100),
la seconde région plastiquement déformable (R2) définit une seconde zone de pivot (43b), de telle sorte qu'une force appliquée à l'extrémité avant (31) de la pièce d'équipement (30) vers la plaque résistante aux chocs (21) parallèle à la direction avant, au-delà du seuil de force, entraîne une flexion plastique des premier et second supports (42a, 42b) et un mouvement de pivotement de la pièce d'équipement autour d'un axe de pivot (200),
l'axe de pivot (200) traverse les première et seconde zones de pivot (43a, 43b), et une projection orthogonale de l'extrémité avant de la pièce d'équipement sur un plan de référence (P) perpendiculaire à la direction avant est située à une distance d'une projection orthogonale de l'axe de pivot (200) sur le plan de référence (P).

8. Agencement avant (1) selon l'une quelconque des revendications précédentes, dans lequel l'ensemble de support (40) est constitué de plusieurs pièces.

9. Agencement avant (1) selon la revendication 8, dans lequel les pièces sont soudées ensemble.

10. Agencement avant (1) selon l'une quelconque des revendications 8 à 9, dans lequel les pièces sont constituées de tôle.

11. Agencement avant (1) selon l'une quelconque des revendications précédentes, dans lequel le premier et, le cas échéant, le second support comportent au moins une nervure de renfort associée (60) s'étendant du cadre (41) à la plaque résistante aux chocs (20).

12. Agencement avant (1) selon la revendication 11, dans lequel le premier et, le cas échéant, le second support forment avec la nervure de renforct associée (60) une section transversale fermée.

13. Agencement avant (1) selon l'une quelconque des revendications précédentes dans lequel la pièce d'équipement (30) est une unité de moteur d'essuie-glace.

14. Agencement avant (1) selon l'une quelconque des revendications précédentes, comprenant en outre un revêtement externe (10) qui recouvre le cadre (41) et recouvre au moins partiellement la pièce d'équipement (30) et qui est de préférence constitué de plastique renforcé de verre.

15. Agencement avant (1) selon la revendication 14, dans lequel l'extrémité avant (31) de la pièce d'équipement fait saillie depuis le revêtement externe (10).
